# EUROPÄISCHE PATENTANMELDUNG

(11) **EP 2 072 357 A2**
(43) Veröffentlichungstag der Anmeldung: **24.06.2009**
(21) Anmeldenummer: 08105640.0
(22) Anmeldetag: 23.10.2008
(51) Int. Cl.: B60S 1/16, B60S 1/26

(54) **Wischergetriebe sowie Wischanlage mit Wischergetriebe**

(30) Priorität: 19.12.2007 DE 102007061379
(71) Anmelder: ROBERT BOSCH GMBH, 70442 Stuttgart (DE)
(72) Erfinder: Surkamp, Gundolf, 08720, Vilafranca Del Penedes (Barcel) (ES); Sterns, Orlando, 76131, Karlsruhe (DE); Geubel, Paul, 76534, Baden-Baden (DE)

(57) **Zusammenfassung**

Die Erfindung betrifft ein Wischergetriebe, insbesondere für eine Kraftfahrzeugwischanlage, zum Umwandeln einer Drehbewegung eines Antriebsrades (4) in eine oszillierende Hin- und Herbewegung einer Wischerwelle, mit einem Verzahnungselement, dessen Verzahnung mit einer Außenverzahnung (16) eines Außenverzahnungselementes (15) in einem drehmomentübertragenden Eingriff ist oder bringbar ist. Erfindungsgemäß ist vorgesehen, dass das Verzahnungselement als Innenverzahnungselement (10) mit einer Innenverzahnung (14) ausgebildet ist.

## Beschreibung

### Stand der Technik

Die Erfindung betrifft ein Wischergetriebe gemäß dem Oberbegriff des Anspruchs 1 sowie eine Wischanlage für ein Kraftfahrzeug gemäß Anspruch 11.

Es sind Wischanlagen für Kraftfahrzeuge bekannt, bei denen ein als Schneckenrad ausgebildetes Antriebsrad von einem Antriebsmotor über eine Gewindeschnecke zu einer kontinuierlichen Drehbewegung angetrieben wird. Um diese kontinuierliche Drehbewegung in eine oszillierende Hin- und Herbewegung einer Wischerwelle und damit eines Wischerarms umzuwandeln, kommen Wischergetriebe zum Einsatz. Mit so genannten Vier-Gelenk-Wischergetrieben können Wischwinkel von bis zu 110° realisiert werden. Nachteilig bei derartigen Wischergetrieben ist der vergleichsweise kleine maximal realisierbare Wischwinkel. Neben Vier-Gelenk-Wischergetrieben sind so genannte Umsetz-Wischergetriebe bekannt, bei denen zwei Außenverzahnungselemente in einem drehmomentübertragenden Eingriff angeordnet sind, wobei die beiden Außenverzahnungselemente sandwichartig zwischen zwei miteinander vernieteten Metallplatten aufgenommen sind, um einen dauerhaften drehmomentübertragenden Eingriff zu gewährleisten. Nachteilig bei diesen Umsetz-Wischergetrieben ist die große Anzahl an benötigten Bauteilen sowie der große Bauraumbedarf, der notwendig ist, um eine Verschwenkbewegung der Außenverzahnungselemente zu ermöglichen.

### Offenbarung der Erfindung

### Technische Aufgabe

Der Erfindung liegt die Aufgabe zugrunde, ein verbessertes Wischergetriebe vorzuschlagen, das aus möglichst wenigen Bauteilen aufgebaut ist und das zudem nur wenig Bauraum benötigt. Bevorzugt soll das Wischergetriebe möglichst wenig spielbelastet sein. Ferner besteht die Aufgabe darin, eine Wischanlage mit einem entsprechend optimierten Wischergetriebe vorzuschlagen.

### Technische Lösung

Diese Aufgabe wird hinsichtlich des Wischergetriebes mit den Merkmalen des Anspruchs 1 und hinsichtlich der Wischanlage mit den Merkmalen des Anspruchs 11 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, eines von zwei miteinander in drehmomentübertragendem Eingriff befindlichen Verzahnungselementen als Innenverzahnungselement mit einer Innenverzahnung auszubilden, wobei die Innenverzahnung mit der Außenverzahnung eines Außenverzahnungselementes in Eingriff ist, damit ein Drehmoment zwischen den Verzahnungselementen übertragen werden kann. Unter einem Innenverzahnungselement wird dabei ein Verzahnungselement verstanden, dessen Verzahnung nach radial innen, bevorzugt zumindest näherungsweise in Richtung des Drehpunktes des Verzahnungselementes, gerichtet ist. Durch das Ineinanderverschachteln der beiden Verzahnungselemente wird der Bauraumbedarf des Wischergetriebes erheblich reduziert. Zudem weist ein nach dem Konzept der Erfindung ausgebildetes Wischergetriebe eine geringe Zahl an Bauteilen auf, insbesondere deshalb, weil auf die die Verzahnungselemente sandwichartig zwischen sich aufnehmenden Plattenelemente verzichtet werden kann. Hieraus resultiert wiederum ein vergleichsweise geringes Gewicht. Darüber hinaus kann bei einem nach dem Konzept der Erfindung ausgebildeten Wischergetriebe, im Gegensatz zu bekannten Wischergetrieben mit zwei Außenverzahnungselementen, auf einfache Weise sichergestellt werden, dass sich zu jeder Zeit mehr als ein Zahn im drehmomentübertragenden Eingriff befindet, wodurch die Zahnbelastung jedes einzelnen Zahns der Innen- sowie der Außenverzahnung und somit Verschleißerscheinungen verringert werden. Dies wiederum ermöglicht es, bei Bedarf das Außenverzahnungselement und/oder das Innenverzahnungselement aus Kunststoff, insbesondere als Kunststoffspritzgussteil, auszubilden. Es ist jedoch auch eine Ausführungsform mit aus Metall bestehenden Verzahnungselementen realisierbar. Aufgrund der minimierten Bauteilzahl werden nicht nur das Gewicht und die Materialkosten reduziert, sondern es resultiert auch eine Minimierung des Montageaufwandes. Vorteilhaft bei einem nach dem Konzept der Erfindung ausgebildeten Wischergetriebe ist weiterhin, dass sich Wischwinkel von bis zu 180° oder bei Bedarf ohne Probleme auch darüber realisieren lassen. Ein nach dem Konzept der Erfindung ausgebildetes Wischergetriebe eignet sich bevorzugt für Heckwischanlagen für Kraftfahrzeuge. Hierauf ist der Einsatz eines erfindungsgemäßen Wischergetriebes jedoch nicht beschränkt - das Wischergetriebe eignet sich auch zur Verwendung in Frontwischanlagen.

In Weiterbildung der Erfindung ist mit Vorteil vorgesehen, dass das Innenverzahnungselement derart gelagert ist, dass sein Drehpunkt relativ zu einem Getriebegehäuse bzw. relativ zu einem Drehpunkt des Außenverzahnungselementes ortsfest ist. Anders ausgedrückt ist das Innenverzahnungselement bevorzugt derart angeordnet, dass seine gedachte oder tatsächliche Drehachse, um die das Innenverzahnungselement bei einer kontinuierlichen Drehbewegung des, vorzugsweise als Schneckenrad ausgebildeten, Antriebsrades verschwenkt wird, in einem konstanten Abstand zur zu dieser parallel verlaufenden gedachten oder tatsächlichen Drehachse des Außenverzahnungselementes angeordnet ist.

Von besonderem Vorteil ist eine Ausführungsform des Wischergetriebes, bei der der Drehpunkt bzw. die Drehachse des Innenverzahnungselementes dem Mittelpunkt eines Teilkreisbogens entspricht, auf dem die Innenverzahnung des Innenverzahnungselementes angeordnet ist. Bevorzugt handelt es sich bei dem Teilkreisbogen, zumindest näherungsweise, um einen Halbkreisbogen, wobei der Abstand vom Drehpunkt zur Verzahnung in Umfangsrichtung konstant ist und dem Krümmungsradius R des Teilkreisbogens entspricht.

Zur Realisierung eines großen Wischwinkels ist es vorteilhaft, wenn sich die Innenverzahnung über einen Umfangswinkel von mindestens 110° erstreckt. Zur Realisierung eines Wischwinkels von 180° sollte der Umfangswinkel, über den sich die Innenverzahnung erstreckt, etwa 180° geteilt durch das Übersetzungsverhältnis zwischen den Verzahnungselementen zuzüglich einer (geringen) Sicherheit entsprechen.

Im Hinblick auf die Realisierung der Lagerung (Führung) des Innenverzahnungselementes gibt es unterschiedliche Möglichkeiten. Beispielsweise ist es denkbar, dass das Innenverzahnungselement mit einer drehbar gelagerten Welle gelagert ist, deren Längsmittelachse von der Drehachse des Innenverzahnungselementes gebildet ist. Zur Minimierung des Bauraums oder um eine Kollision einer derartigen drehbar gelagerten Welle mit dem Außenverzahnungselement zu vermeiden, ist eine Ausführungsform bevorzugt, bei der das Innenverzahnungselement an seinem Außenumfang gelagert bzw. geführt ist. Diese Lagerung kann beispielsweise als Gleitlagerung ausgebildet sein. Bevorzugt liegt das Innenverzahnungselement unmittelbar an einem Getriebegehäuse, vorzugsweise an der Innenseite einer Umfangswand des Getriebegehäuses, an. Besonders vorteilhaft ist dabei eine Ausführungsform, bei der das Innenverzahnungselement während des Betriebs des Wischergetriebes entlang des ortsfesten Getriebegehäuses gleitet. Aus Gründen der Reibungsminimierung ist eine Ausführungsform bevorzugt, bei der das Innenverzahnungselement nicht mit einem großen Außenumfangsabschnitt am Getriebegehäuse anliegt, sondern lediglich an zwei in Umfangsrichtung des Innenverzahnungselementes voneinander beabstandeten Stellen (Anlagebereichen).

In Weiterbildung der Erfindung ist mit Vorteil vorgesehen, dass das Außenverzahnungselement als Zahnrad, insbesondere als Stirnrad, ausgebildet ist. Bevorzugt ist der Teilkreisradius des als Stirnrad ausgebildeten Zahnrades geringer als der Teilkreisradius der Innenverzahnung des Innenverzahnungselementes. Besonders bevorzugt ist eine Ausführungsform des Außenverzahnungselementes als Zahnrad mit einer umlaufend ausgebildeten Außenverzahnung.

Zur Umwandlung der kontinuierlichen Drehbewegung des Antriebsrades in eine oszillierende Hin- und Herbewegung des Innenverzahnungselementes ist in Weiterbildung der Erfindung mit Vorteil vorgesehen, dass das Innenverzahnungselement mit Abstand zu seinem Drehpunkt, vorzugsweise auf einer der Innenverzahnung gegenüberliegenden Seite, gelenkig mit einem, insbesondere plattenförmigen, Lenker verbunden ist. Zur Einsparung von Bauteilen ist dieser Lenker bevorzugt unmittelbar an dem Antriebsrad angelenkt, vorzugsweise in einem Bereich radial zwischen einer Außenverzahnung des Antriebsrades und seinem Drehpunkt.

Im Hinblick auf eine Bauteil- und Bauraumminimierung ist eine Ausführungsform des Wischergetriebes von Vorteil, bei der das, vorzugsweise als Stirnrad ausgebildete, Außenverzahnungselement drehfest mit der einteilig oder mehrteilig ausgebildeten Wischerwelle verbunden ist.

Zur Verschleißminimierung ist eine Ausführungsform bevorzugt, bei der in jeder relativen Schwenkposition zwischen dem Innenverzahnungselement und dem Außenverzahnungselement mindestens zwei Zähne, vorzugsweise mindestens drei Zähne, der Innenverzahnung des Innenverzahnungselementes in einem drehmomentübertragenden Eingriff mit der Außenverzahnung des Außenverzahnungselementes sind. Dies ist unter Berücksichtigung der Elastizität insbesondere dann realisierbar, wenn das Außenverzahnungselement und/oder das Innenverzahlungselement aus Kunststoff ausgebildet sind/ist.

Die Erfindung führt auch auf eine Wischanlage für ein Kraftfahrzeug mit einem nach dem Konzept der Erfindung ausgebildeten Wischergetriebe, wobei von dem Wischergetriebe bevorzugt unmittelbar die Wischerwelle oszillierend angetrieben wird. Besonders bevorzugt ist dabei eine Ausführungsform, bei der die Wischerwelle drehfest mit dem Außenverzahnungselement des Wischergetriebes verbunden ist.

### Kurze Beschreibung der Zeichnungen

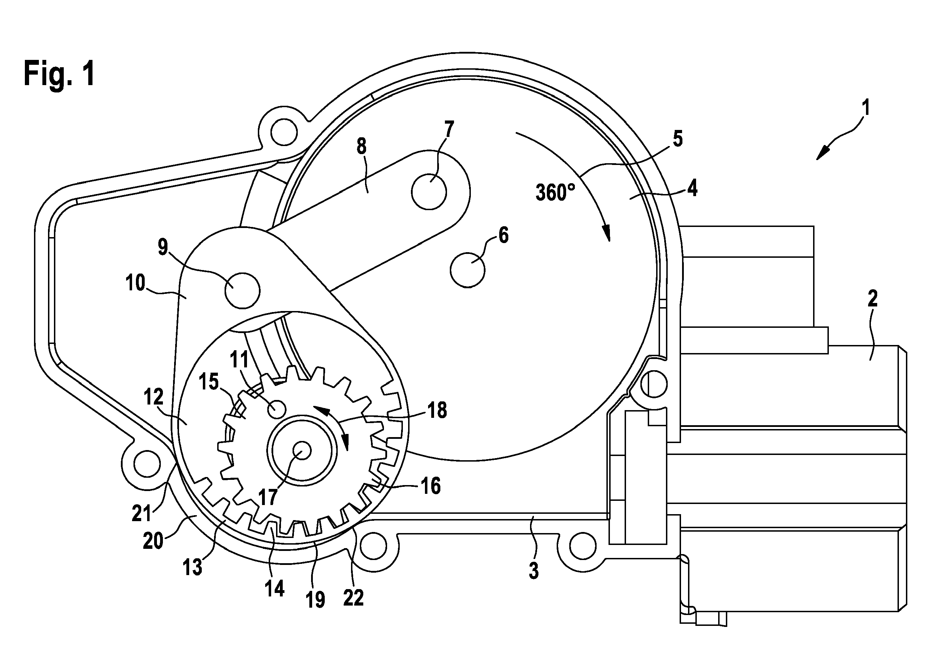

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen Fig. 1 eine schematische Draufsicht auf eine Wischanlage mit einem Wischergetriebe.

### Ausführungsform der Erfindung

In Fig. 1 ist eine als Heckscheibenwischanlage ausgebildete Wischanlage 1 für ein Kraftfahrzeug gezeigt. Die Wischanlage 1 umfasst einen in einem Motorgehäuse 2 angeordneten elektrischen Antriebsmotor (nicht gezeigt). Dieser treibt in einer kontinuierlichen Drehbewegung eine ebenfalls nicht gezeigte Motorwelle an, auf der ein ebenfalls nicht gezeigtes Schneckenrad sitzt. Die Motorwelle erstreckt sich dabei aus Richtung des Motorgehäuses 2 in ein Getriebegehäuse 3, an dem das Motorgehäuse 2 angeflanscht ist. Eine auf der Motorwelle sitzende Getriebeschnecke kämmt mit einer nicht gezeigten, als Schneckenverzahnung ausgebildeten Außenverzahnung eines großen Antriebsrades 4. Dieses wird aufgrund der drehmomentübertragenden Kopplung mit dem elektrischen Antriebsmotor zu einer kontinuierlichen Drehbewegung in Pfeilrichtung 5 angetrieben. Der Drehpunkt bzw. die Drehachse des Antriebsrades 4 ist mit dem Bezugszeichen 6 gekennzeichnet.

In einem Bereich radial zwischen dem Außenumfang des Antriebsrades 4 und dem Drehpunkt 6 ist ein erstes Drehgelenk 7 angeordnet, über das ein plättchenförmiger, langgestreckter Lenker 8 an dem Antriebsrad 4 angelenkt ist. Im Bereich seines von dem ersten Drehgelenk 7 abgewandten Endes ist der Lenker 8 über ein zweites Drehgelenk 9 mit einem Innenverzahnungselement 10 verbunden. Bei einer kontinuierlichen rotierenden Drehbewegung des Antriebsrades 4 um den Drehpunkt 6 wird das Innenverzahnungselement 10 durch die Kopplung des Antriebsrades 4 mit dem Lenker 8 um einen Drehpunkt 11 oszillierend hin und her bewegt. Das als scheibenförmiges Bauteil ausgebildete Innenverzahnungselement 10 weist eine kreisförmig konturierte innere Ausnehmung 12 auf, deren Innenumfang in einen Teilkreisbogen 13 mit einer nach radial innen in Richtung des Drehpunktes 11 gerichteten Innenverzahnung 14 versehen ist, die aus in Umfangsrichtung alternierend angeordneten Zähnen und Zahnlücken gebildet ist. Die Innenverzahnung 14 befindet sich auf einer dem zweiten Drehgelenk 9 gegenüberliegenden Seite des Drehpunktes 11. Die Außenkontur des Innenverzahnungselementes 10 weist zumindest näherungsweise eine Tropfenform auf, wobei sich das zweite Drehgelenk 9 im Bereich des sich verjüngenden, aus Vollmaterial ausgebildeten Abschnittes des tropfenförmigen Innenverzahnungselementes 10 mit Abstand zu der Ausnehmung 12 befindet.

Innerhalb des Innenverzahnungselementes 10 ist ein als Stirnrad-Zahnrad ausgebildetes Außenverzahnungselement 15 angeordnet, das an seinem Außenumfang eine umlaufende Außenverzahnung 16 aufweist, die aus in Umfangsrichtung alternierend angeordneten Zähnen und Zahnlücken besteht. Wie sich aus Fig. 1 ergibt, befinden sich zu jeder Zeit zwei Zähne der Außenverzahnung 16 in einem drehmomentübertragenden Eingriff mit der Innenverzahnung 14 des Innenverzahnungselementes 10, wodurch die Belastung einzelner Zähne erheblich reduziert wird. Das Außenverzahnungselement 15 ist um einen Drehpunkt 17 bzw. eine Drehachse verdrehbar, wobei der Abstand zwischen dem Drehpunkt 17 des Außenverzahnungselementes 15 und dem Drehpunkt 11 des Innenverzahnungselementes 10 zu jeder Zeit konstant ist. Der Drehpunkt 11 des Innenverzahnungselementes 10 befindet sich zu jeder Zeit unmittelbar benachbart zu einer gedachten, das zweite Drehgelenk 9 mit dem Drehpunkt 17 des Außenverzahnungselementes 15 verbindenden Linie. Wie sich aus Fig. 1 weiter ergibt entspricht der Durchmesser des Außenverzahnungselementes 15 nur in etwa 2/3 des Innendurchmessers der Ausnehmung 12, sodass der Drehpunkt 11 des Innenverzahnungselementes 10 in einen Bereich fällt, in dem das Außenverzahnungselement 15 angeordnet ist.

Durch die drehmomentübertragende Kopplung der Außenverzahnung 16 mit der Innenverzahnung 14 wird das Außenverzahnungselement 15 in Pfeilrichtungen 18 oszillierend um den Drehpunkt 17 bzw. um die Drehachse bewegt. Hierdurch wird gleichermaßen eine sich in die Zeichnungsebene hineinerstreckende, drehfest mit dem Außenverzahnungselement 15 verbundene Wischerwelle oszillierend in den Pfeilrichtungen 18 angetrieben.

Damit das Innenverzahnungselement 10 bei einer Verschwenkbewegung des Innenverzahnungselementes 10 relativ zu dem Außenverzahnungselement 15 nicht um einen wandernden, sondern um den festen Drehpunkt 11 rotiert, ist das Innenverzahnungselement 10 an seinem Außenumfang 19 an der Innenseite einer Umfangswand 20 des Getriebegehäuses 3 gelagert. Anders ausgedrückt stützt sich das Innenverzahnungselement 10 am Getriebegehäuse 3 ab. Genauer gesagt berührt das Innenverzahnungselement 10 zwei in Umfangsrichtung voneinander beabstandete Lagerstellen 21, 22 der Umfangswand 20. Der Bereich der Umfangswand 20 zwischen den Lagerstellen 21, 22 weist einen kleineren Krümmungsradius auf als der Außenumfang 19 des Innenverzahnungselementes 10, sodass in einem Bereich in Umfangsrichtung zwischen den Lagerstellen 21, 22 ein sichelförmiger Spalt 23 radial zwischen der Umfangswand 20 und dem Außenumfang 19 des Innenverzahnungselementes 10 ausgebildet ist, woraus wiederum eine reduzierte Reibung während des Betriebs der Wischanlage 1 resultiert.

Wie sich aus Fig. 1 weiter ergibt ist die Innenverzahnung 14 des Innenverzahnungselementes 10 radial zwischen dem Getriebegehäuse 3, genauer der Umfangswand 20 des Getriebegehäuses 3 und dem Außenverzahnungselement 15 angeordnet. Somit ist das Innenverzahnungselement 10 gefangen und vollführt eine definierte, geführte, pendelnde Bewegung in seinem Drehpunkt 11.

## Patentansprüche

1. Wischergetriebe, insbesondere für eine Kraftfahrzeugwischanlage, zum Umwandeln einer Drehbewegung eines Antriebsrades (4) in eine oszillierende Hin- und Herbewegung einer Wischerwelle, mit einem Verzahnungselement, dessen Verzahnung mit einer Außenverzahnung (16) eines Außenverzahnungselementes (15) in einem drehmomentübertragenden Eingriff ist oder bringbar ist,
**dadurch gekennzeichnet,**
**dass** das Verzahnungselement als Innenverzahnungselement (10) mit einer Innenverzahnung (14) ausgebildet ist.

2. Wischergetriebe nach Anspruch 1,
**dadurch gekennzeichnet,**
**dass** das Innenverzahnungselement (10) derart gelagert ist, dass sein Drehpunkt (11) relativ zu einem Getriebegehäuse (3) ortsfest ist.

3. Wischergetriebe nach einem der Ansprüche 1 oder 2,
**dadurch gekennzeichnet,**
**dass** der Drehpunkt (11) des Innenverzahnungselementes (10) dem Mittelpunkt eines Teilkreisbogens entspricht, auf dem die Innenverzahnung (14) angeordnet ist.

4. Wischergetriebe nach einem der vorhergehenden Ansprüche,
**dadurch gekennzeichnet,**
**dass** sich die Innenverzahnung (14) über einen Innenumfangswinkel von mindestens 90°, vorzugsweise von mindestens 120°, insbesondere von mindestens 140° erstreckt.

5. Wischergetriebe nach einem der vorhergehenden Ansprüche,
**dadurch gekennzeichnet,**
**dass** das Innenverzahnungselement (10) an seinem Außenumfang (19) gelagert ist.

6. Wischergetriebe nach einem der vorhergehenden Ansprüche,
**dadurch gekennzeichnet,**
**dass** das Außenverzahnungselement (15) als Zahnrad, insbesondere als Stirnrad, ausgebildet ist, bei dem die Außenverzahnung (16) vorzugsweise umlaufend ausgebildet ist.

7. Wischergetriebe nach einem der vorhergehenden Ansprüche,
**dadurch gekennzeichnet,**
**dass** das Innenverzahnungselement (10) mit Abstand zu seinem Drehpunkt (11) gelenkig mit einem Lenker (8) verbunden ist.

8. Wischergetriebe nach Anspruch 7,
**dadurch gekennzeichnet,**
**dass** der Lenker (8) unmittelbar gelenkig mit dem Antriebsrad (4) verbunden ist.

9. Wischergetriebe nach einem der vorgehenden Ansprüche,
**dadurch gekennzeichnet,**
**dass** die Wischerwelle drehfest mit dem Außenverzahnungselement (15) verbunden ist.

10. Wischergetriebe nach einem der vorhergehenden Ansprüche,
**dadurch gekennzeichnet,**
**dass** in jeder Schwenkposition des Innenverzahnungselementes (10) relativ zu dem Außenverzahnungselement (15) mindestens zwei Zähne, vorzugsweise mindestens drei Zähne, besonders bevorzugt mindestens vier Zähne, der Innenverzahnung (14) des Innenverzahnungselementes (10) im drehmomentübertragenden Eingriff mit der Außenverzahnung (16) des Außenverzahnungselementes (15) sind.

11. Wischanlage für ein Kraftfahrzeug mit einer von einem Wischergetriebe nach einem der vorhergehenden Ansprüche angetriebenen Wischerwelle.
